# FASCICULE DE BREVET EUROPEEN

(11) **EP 0 818 648 B1**
(45) Date de publication et mention de la délivrance du brevet: **30.05.2001**
(21) Numéro de dépôt: 97401640.4
(22) Date de dépôt: 09.07.1997
(51) Int. Cl.: F16L 11/24

(54) **Procédé de fabrication d'un tuyau poreux à spires hélicoidales collées, notamment pour le transport de gaz**
Herstellungsverfahren eines durchlässigen schraubenförmigen geklebten Rohres, insbesondere zum Gastransport
Manufacturing method for a porous pipe having bonded spirals, in particular for gas transport

(30) Priorité: 10.07.1996 FR 9608585
(43) Date de publication de la demande: 14.01.1998
(73) Titulaire: WESTAFLEX-AUTOMOBILE, 59058 Roubaix Cedex 1 (FR)
(72) Inventeur: Lepoutre, Henri, 59058 Roubaix Cedex 1 (FR)
(74) Mandataire: Eidelsberg, Victor Albert

(56) Documents cités:
- FR-A- 2 720 471
- GB-A- 789 522
- US-A- 2 486 387
- US-A- 3 739 815

## Description

La présente invention est relative aux tuyaux poreux qui sont constitués par l'enroulement en hélice sur elle-même d'une bande en matériau poreux, avec chevauchement, sur une partie de la largeur de la bande, des spires collées.

L'invention s'applique en particulier, mais non exclusivement, à de tels tuyaux qui sont souples et étanches aux liquides et qui sont destinés au transport de fluide gazeux dans les automobiles, par exemple pour le transfert d'air dans le moteur ou l'habitacle; cette porosité est utilisée pour atténuer la transmission des bruits.

Par le document GB-A-789.522, on connaît un tuyau souple qui est constitué par l'enroulement en hélice d'une bande, avec interposition d'un fil de renfort en métal ou en matière plastique. Ce document indique seulement, en ce qui concerne la matière de la bande, que cette matière peut être thermoplastique ou en caoutchouc, naturel ou synthétique, notamment en PVC, et que l'assemblage se fait par collage.

Ce document ne traite pas de la porosité de la matière et, en particulier, il n'indique pas que cette matière peut être fibreuse, par exemple en fibres de polyester.

Accessoirement, en ce qui concerne le fil de renfort, ce document ne prévoit pas que ce fil est mis en place avec jeu.

On connaît également, par le document US-A-2.486.387, un tuyau souple constitué par l'enroulement en hélice d'une bande avec chevauchement des spires, un fil de renfort étant interposé entre les spires. Dans ce document également, l'assemblage se fait par collage. Quant à la matière de la bande, il est indiqué que celle-ci peut être en tissu, notamment en toile, ce qui permet de penser que le tuyau est poreux.

Toutefois, ce document ne traite pas de la porosité finale obtenue, notamment en relation avec le collage.

L'invention a pour but de fournir un procédé de fabrication d'un tel tuyau dont la porosité peut être soigneusement maîtrisée.

A cet effet, comme indiqué dans la partie caractérisante de la revendication 1, on dépose en continu sur une partie de la largeur de la bande à enrouler une quantité prédéterminée et contrôlée de colle par unité de surface, en fonction notamment des caractéristiques de la bande, des caractéristiques de la colle et de la porosité à obtenir.

Ainsi, selon l'invention, la porosité du tuyau obtenue est définie, conjointement, par les caractéristiques de porosité du matériau lui-même constituant la bande, et également par une maîtrise de la quantité de colle déposée par unité de surface.

Par exemple, la colle est thermofusible et déposée à chaud par léchage, cette colle pouvant être, par exemple, à base de polyoléfines et de résines synthétiques.

La bande peut être en un matériau fibreux, notamment en fibres de polyester.

Avantageusement, on ménage une zone étroite non encollée le long du bord arrière libre de la partie de chevauchement des spires, pour que, lors de l'enroulement de la bande en hélice sur elle-même, la colle ne déborde pas.

Suivant un mode de mise en oeuvre préféré de l'invention, simultanément à l'enroulement de la bande en hélice, on interpose un fil de renfort entre les parties de spires en chevauchement et on encolle la bande suivant deux zones qui sont situées de part et d'autre de la zone intermédiaire de réception du fil de renfort, la largeur de cette zone intermédiaire non encollée étant supérieure à la largeur du fil de renfort pour que ce dernier, après la formation du tuyau et lors de son utilisation, puisse coulisser localement par rapport aux spires de la bande, notamment lors des déformations du tuyau en flexion. Par exemple, ce fil de renfort est en matière synthétique, notamment en polyester, ou encore en métal, par exemple en acier à ressort. Par exemple, le fil de renfort a un diamètre de 1,4 mm et il est bordé, de chaque côté, par une zone non encollée d'une largeur de 1 à 4 mm. D'une manière générale, la largeur de la zone non encollée de part et d'autre du fil de renfort dépendra de la grosseur de ce dernier et du jeu souhaité.

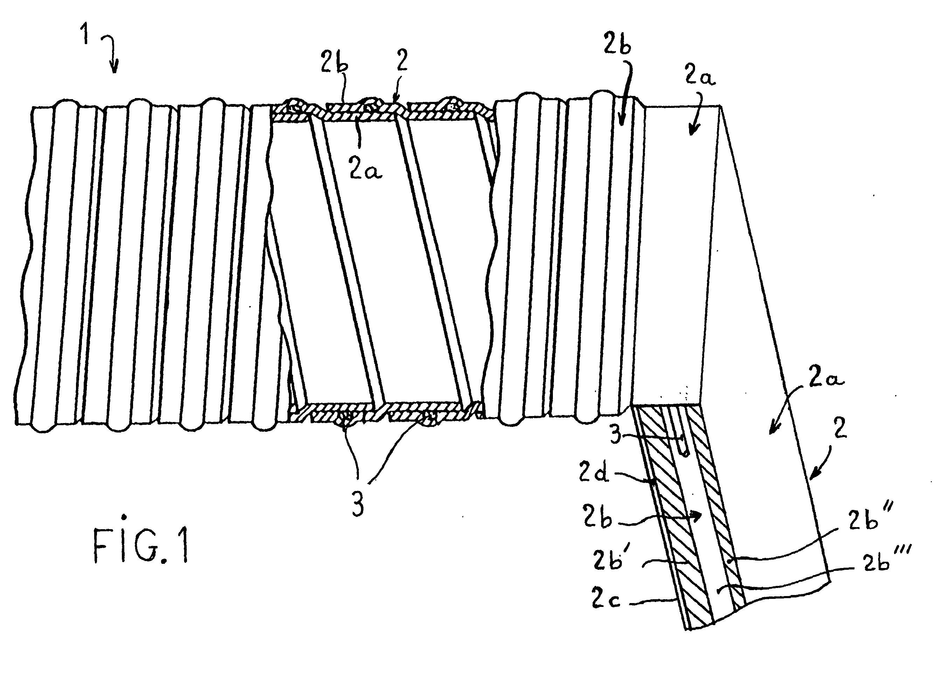

On comprendra bien l'invention à la lecture du complément de description qui va suivre et en référence au dessin annexé qui fait partie de la description et dont la Figure unique est une vue en élévation latérale, partiellement arrachée, d'un tuyau en cours de fabrication selon le procédé de l'invention.

On a représenté sur la Figure un tuyau 1 qui est constitué, d'une manière générale connue en soi, par l'enroulement en hélice sur elle-même d'une bande 2 de matériau poreux, par exemple de matériau fibreux, notamment en fibres de polyester. Cette bande est enroulée sur elle-même, avec chevauchement des spires sur une partie de la largeur de la bande. Par exemple, la bande peut avoir une largeur d'environ 30 mm, pour un pas d'enroulement d'environ 13 mm, ce qui donne un chevauchement de la bande sur elle-même d'environ 17 mm.

Dans le sens longitudinal, la bande 2 est donc constituée de deux zones, à savoir une zone 2a qui est recouverte par la spire suivante, et une zone 2b qui recouvre la zone 2a de la spire précédente.

Conformément à l'invention, on dépose en continu, sur une partie au moins de la zone chevauchante 2b, une quantité prédéterminée et contrôlée de colle par unité de surface, en fonction notamment des caractéristiques de la bande 2, des caractéristiques de la colle et de la porosité désirée à obtenir.

Sur le tuyau 1 terminé, la porosité est donc définie, d'une part, par la porosité totale des deux zones superposées 2a et 2b de deux spires successives et, d'autre part, par les caractéristiques de porosité de la colle.

Avantageusement, on utilise une colle thermofusible déposée à chaud par léchage.

De préférence également, on ménage le long du bord arrière libre 2c de la zone 2b de la bande une zone étroite 2d non encollée, de manière à éviter un débordement de la colle au-delà de la bande 2 lors de l'enroulement.

Avantageusement, et de façon connue en soi, on fait comporter au tuyau 1 un fil ou jonc de renfort 3, par exemple en matière synthétique, notamment en polyester, ou en métal, notamment en acier à ressort, ce fil étant interposé entre les parties de spires en chevauchement, sensiblement au milieu de la zone de chevauchement. De façon connue, ce fil de renfort 3 est mis en place lors de l'enroulement de la bande. Selon une caractéristique avantageuse de l'invention, dans le cas où on utilise un tel fil de renfort 3, la zone d'encollage 2b est constituée de deux zones séparées 2b' et 2b" qui sont situées de part et d'autre de la zone intermédiaire 2b''' de réception du fil 3, cette zone intermédiaire 2b''' n'étant pas encollée et présentant une largeur qui est supérieure à la largeur du fil de renfort pour que ce dernier, après la formation du tuyau 1 et lors de l'utilisation de celui-ci, puisse coulisser localement par rapport aux spires de la bande, notamment lors des déformations du tuyau en flexion. Cette caractéristique permet de donner au tuyau 1 une bonne capacité de déformation tout en lui conférant, grâce au fil de renfort 3, une excellente rigidité dans le sens radial.

Dans un exemple de réalisation, le fil de renfort 3 présente un diamètre de 1,4 mm, et il est bordé, de chaque côté, par une zone non encollée d'une largeur de 1 mm à 4 mm, la zone intermédiaire non encollée 2b''' ayant ainsi une largeur de 3,4 mm à 9,4 mm.

Dans l'exemple pratique précédent d'une bande 1 d'une largeur de 30 mm, avec un pas d'enroulement de 13 mm et un fil de renfort d'un diamètre de 1,4 mm, la zone marginale non encollée 2d présente une largeur de 0,5 mm, les zones encollées 2b' et 2b" présentent une largeur respectivement de 5 mm et de 4,1 mm, et la zone intermédiaire non encollée 2b''' présente une largeur de 3,4 mm, le fil de renfort étant bordé, de chaque côté, par une zone non encollée de 1 mm.

## Revendications

1. Procédé de fabrication d'un tuyau poreux (1) à spires hélicoïdales collées, notamment pour le transport de gaz, et en particulier pour le transport d'air dans les automobiles, dans lequel on enroule une bande (2) de matériau poreux sur elle-même en hélice, avec chevauchement des spires sur une partie de la largeur de la bande, caractérisé en ce qu'il consiste à déposer en continu sur une partie (2b) de la bande à enrouler une quantité prédéterminée et contrôlée de colle par unité de surface, en fonction notamment des caractéristiques de la bande (2), des caractéristiques de la colle et de la porosité à obtenir.

2. Procédé selon la revendication 1, caractérisé en ce que la colle est déposée sur la bande par léchage.

3. Procédé selon l'une des revendications 1 et 2, caractérisé en ce que la colle est thermofusible et déposée à chaud.

4. Procédé selon la revendication 3, caractérisé en ce que la colle est à base de polyoléfines et de résines synthétiques.

5. Procédé selon l'une des revendications 1 à 4, caractérisé en ce que la bande (2) est en matériau fibreux, notamment en fibres de polyester.

6. Procédé selon l'une des revendications 1 à 5, caractérisé en ce qu'on ménage une zone étroite (2d) non encollée le long du bord arrière libre (2c) de la partie de chevauchement des spires.

7. Procédé selon l'une des revendications 1 à 6, caractérisé en ce que, simultanément à l'enroulement de la bande (2) en hélice, on interpose un fil de renfort (3) entre les parties de spires en chevauchement et en ce qu'on encolle la bande suivant deux zones (2b', 2b") situées de part et d'autre de la zone intermédiaire (2b''') de réception du fil de renfort (3), la largeur de cette zone intermédiaire non encollée (2b''') étant supérieure à la largeur du fil de renfort (3) pour que ce dernier, après la formation du tuyau (1) et lors de son utilisation, puisse coulisser localement par rapport aux spires de la bande, notamment lors des déformations du tuyau en flexion.

8. Procédé selon la revendication 7, caractérisé en ce que le fil de renfort (3) est en matière synthétique, notamment en polyester, ou en métal, notamment en acier à ressort.

9. Procédé selon l'une des revendications 7 et 8, caractérisé en ce que, sur le tuyau fini, le fil de renfort (3) est bordé de chaque côté par une zone non collée d'une largeur de 1 mm à 4 mm .

## Patentansprüche

1. Verfahren zum Herstellen eines porösen bzw. durchlässigen Rohrs bzw. Schlauchs (1) mit verklebten schraubenförmigen bzw. helikoidalen Spiralen, speziell zum Transport von Gas und insbesondere zum Transport von Luft in Kraftfahrzeugen, wobei ein Band (2) aus porösem Material schrauben- bzw. spiralförmig um sich selbst gewickelt wird, wobei sich die Spiralen über einen Teil der Bandbreite überlappen, dadurch gekennzeichnet, daß
das Verfahren darin besteht, auf einem Abschnitt (2b) des zu wickelnden Bandes eine vorbestimmte und kontrollierte Menge Klebstoff pro Flächeneinheit je nach den Eigenschaften des Bandes (2), den Eigenschaften des Klebstoffs und der zu erzielenden Porosität aufzubringen.

2. Verfahren gemäß Anspruch 1, dadurch gekennzeichnet, daß der Klebstoff auf das Band durch Flammspritzen (léchage) aufgebracht wird.

3. Verfahren gemäß einem der Ansprüche 1 und 2, dadurch gekennzeichnet, daß der Klebstoff durch Wärme schmelzbar ist und warm aufgebracht wird.

4. Verfahren gemäß Anspruch 3, dadurch gekennzeichnet, daß der Klebstoff auf Polyolefinen und Kunstharzen basiert.

5. Verfahren gemäß einem der Ansprüche 1 bis 4, dadurch gekennzeichnet, daß das Band (2) aus Fasermaterial, insbesondere aus Polyesterfasern besteht.

6. Verfahren gemäß einem der Ansprüche 1 bis 5, dadurch gekennzeichnet, daß längs des hinteren freien Randes (2c) des Überlappungsabschnitts der Spiralen eine schmale klebstofffreie Zone (2d) vorgesehen ist.

7. Verfahren gemäß einem der Ansprüche 1 bis 6, dadurch gekennzeichnet, daß gleichzeitig mit dem Wickeln des Bandes (2) zu einer Spirale ein Verstärkungsfaden bzw. -draht (3) zwischen die sich überlappenden Spiralabschnitte eingebracht wird und das Band entlang zweier Zonen (2b',2b'') mit Klebstoff versehen wird, die auf beiden Seiten der Mittelzone (2b''') zum Aufnehmen des Verstärkungsfadens bzw. -drahts liegen, wobei die Breite der klebstofffreien Mittelzone (2b''') größer als die Breite des Verstärkungsfadens bzw. - drahts (3) ist, damit dieser nach der Ausbildung des Rohrs bzw. Schlauchs (1) und während dessen Verwendung insbesondere bei Biegeverformungen des Rohrs bzw. Schlauchs in Bezug auf die Spiralen des Bandes lokal gleiten bzw. sich verschieben kann.

8. Verfahren gemäß Anspruch 7, dadurch gekennzeichnet, daß der Verstärkungsfaden bzw -draht (3) aus Kunststoffmaterial, insbesondere Polyester, oder aus Metall, insbesondere Federstahl, besteht.

9. Verfahren gemäß einem der Ansprüche 7 und 8, dadurch gekennzeichnet, daß am fertiggestellten Rohr bzw. Schlauch der Verstärkungsdraht bzw. -faden auf jeder Seite von einer klebstofffreien Zone einer Breite von lmm bis 4mm umgeben ist.

## Claims

1. A manufacturing process of a porous pipe (1) with glued helical turns, notably for the transportation of gases, and in particular for the transportation of air in cars, wherein a strip (2) of porous material is wrapped on itself helicoidally, with said turns straddling each other on part of the width of said strip, characterised in that said process consists of continuously depositing a predetermined and controlled quantity of glue by unit of surface onto a portion (2b) of said strip to wrap, notably according to the characteristics of the strip (2), the characteristics of the glue and the porosity to obtain.

2. A process according to claim 1, characterized in that said glue is deposited onto said strip by means of a licking action.

3. A process according to one of claims 1 and 2, characterized in that said glue is a hot melt glue and is hot when deposited.

4. A process according to claim 3, characterized in that said glue comprises polyolefins and synthetic resins.

5. A process according to one of claims 1 to 4, characterized in that said strip (2) is made of fibrous material, notably made of polyester fibres.

6. A process according to one of claims 1 to 5, characterized in that a narrow unglued area (2d) is implemented along the free back edge (2c) of the straddling area of the turns.

7. A process according to one of claims 1 to 6, characterized in that a strengthening wire (3) is inserted between the portions of the turns respectively straddling one another, simultaneously to the wrapping of the strip in a helical fashion, and wherein said strip is glued following two areas (2', 2") located on either side of the intermediary area (2''') receiving said strengthening wire (3), with the width of said intermediary area (2''') being larger than the width of said strengthening wire so that said strengthening wire, upon the pipe (1) being formed and subsequently utilised, may locally slide relatively to the turns of the strip, notably when the form of the pipe is modified when flexed.

8. A process according to claim 7, characterized in that said strengthening wire (3) is made of a synthetic material, notably made of polyester, or said strengthening wire (3) is made of metal, notable made of spring-grade steel.

9. A process according to one of claims 7 and 8, characterized in that said strengthening wire (3) is bordered on either side by an unglued area, the width of which is comprised between 1 millimetre and 4 millimetres.
